# FASCICULE DE BREVET EUROPEEN

(11) **EP 4 289 601 B1**
(45) Date de publication et mention de la délivrance du brevet: **14.08.2024**
(21) Numéro de dépôt: 23176465.5
(22) Date de dépôt: 31.05.2023
(51) Int. Cl.: B29C 64/321, B65H 49/32, B65H 63/08

(54) **DISPOSITIF DE DÉPÔT DE MATIÈRE SOUS FORME DE FIL COMPRENANT AU MOINS UNE BOBINE DE FIL ET AU MOINS UN SYSTÈME D'INDICATION DU NIVEAU DE REMPLISSAGE DE LA BOBINE**
VORRICHTUNG ZUM ABLEGEN VON DRAHTMATERIAL MIT MINDESTENS EINER GARNSPULE UND MINDESTENS EINEM SYSTEM ZUR ANZEIGE DES FÜLLNIVEAUS DER SPULE
DEVICE FOR DEPOSITING WIRE MATERIAL COMPRISING AT LEAST ONE WIRE COIL AND AT LEAST ONE INDICATION SYSTEM OF THE FILLING LEVEL OF THE COIL

(30) Priorité: 07.06.2022 FR 2205421
(43) Date de publication de la demande: 13.12.2023
(73) Titulaire: AIRBUS OPERATIONS (S.A.S.), 31060 Toulouse (FR)
(72) Inventeur: SICRE, Matthieu, 31060 Toulouse (FR)
(74) Mandataire: Airbus-OPS SAS

(56) Documents cités:
- EP-A1- 3 693 116
- EP-A1- 3 919 214
- CN-A- 110 155 811
- DE-U1- 202014 105 812
- FR-A3- 2 432 157
- US-A1- 2015 027 239

## Description

La présente demande se rapporte à un dispositif de dépôt de matière sous forme de fil comprenant au moins une bobine de fil et au moins un système d'indication du niveau de remplissage de la bobine.

Selon une technique de fabrication, une pièce est réalisée par fabrication additive en empilant des couches de matière obtenues par fusion d'une matière via l'utilisation d'une source d'énergie focalisée, comme un faisceau laser ou un faisceau d'électrons par exemple. Selon une technique dite par dépôt de matière sous énergie focalisée (également appelée DED pour « Directed Energy Déposition » en anglais), la matière sous forme de fil est déposée simultanément à l'apport d'énergie.

Selon un mode de réalisation, un dispositif de dépôt comprend une structure, une tête de dépôt supportée par la structure ainsi qu'au moins une bobine de fil montée pivotante autour d'un axe de rotation horizontal, solidaire de la structure, et configurée pour alimenter en fil la tête de dépôt. Selon une configuration, la bobine de fil comprend un moyeu sur lequel est enroulé le fil ainsi que deux flasques, positionnés à chaque extrémité du moyeu, entre lesquels est enroulé le fil. Selon un agencement, la bobine de fil est coiffée par un capotage si bien que le niveau de fil n'est pas directement visible par un opérateur. Pour indiquer le niveau de remplissage de la bobine, cette dernière peut être équipée d'un capteur électrique ou électronique, comme un capteur magnétique ou inductif par exemple, positionné de manière adéquate sur la bobine pour indiquer l'absence de fil à un certain niveau. Ce mode de réalisation n'est pas pleinement satisfaisant car il nécessite une source d'énergie pour fonctionner.

US 2015/027239 A1 divulgue un dispositif de dépôt de matière sous forme de fil selon le préambule de la revendication 1.

La présente invention vise à remédier à tout ou partie des inconvénients de l'art antérieur.

A cet effet, l'invention a pour objet un dispositif de dépôt de matière sous forme de fil comprenant une structure, une tête de dépôt supportée par la structure, une bobine de fil configurée pour alimenter en fil la tête de dépôt et pivoter autour d'un axe de rotation ainsi qu'au moins un système d'indication configuré pour indiquer un niveau de remplissage de la bobine de fil.

Selon l'invention, le système d'indication comprend un support solidaire de la structure, au moins une tige s'étendant entre des première et deuxième extrémités selon une deuxième direction sécante à l'axe de rotation, un patin relié à la première extrémité de la tige et configuré pour prendre appui contre un fil enroulé sur la bobine de fil, une liaison glissière configurée pour permettre à la tige de se translater selon la deuxième direction ainsi qu'un élément de rappel configuré pour translater la tige en direction de l'axe de rotation, la tige occupant une position en fonction d'un niveau de remplissage de la bobine de fil.

L'invention permet d'obtenir un système d'indication de type passif permettant d'indiquer, sans besoin d'énergie électrique, le niveau de remplissage d'une bobine de fil.

Selon une autre caractéristique, le système d'indication comprend au moins un premier repère mobile solidaire de la tige ainsi qu'un deuxième repère fixe, les premier et deuxième repères occupant une position relative en fonction du niveau de remplissage de la bobine de fil.

Selon une autre caractéristique, chaque liaison glissière comprend un tube solidaire du support, coaxial à la tige et configuré pour loger l'élément de rappel ainsi qu'au moins un palier coulissant solidaire du tube et dans lequel coulisse la tige.

Selon une autre caractéristique, le deuxième repère est une lumière, au niveau du tube, permettant de visualiser depuis une zone extérieure au tube une portion de la tige sur laquelle est (sont) apposé(s) le (ou les) premier(s) repère(s).

Selon une autre caractéristique, le système d'indication comprend un unique premier repère positionné sur la tige de manière à être au droit de la lumière lorsque le patin est en contact avec le (ou les) fil(s) enroulé(s) sur la bobine de fil et que cette dernière est à un niveau de remplissage faible.

Selon une autre caractéristique, le système d'indication comprend plusieurs premiers repères répartis sur la longueur de la tige.

Selon une autre caractéristique, les premiers repères ont des couleurs différentes en fonction de leur position sur la tige.

Selon une autre caractéristique, les couleurs des premiers repères sont déterminées de manière à ce que les premiers repères situés au droit du deuxième repère soient :
a. dans au moins une première couleur lorsque le patin est en contact avec le (ou les) fil(s) enroulé(s) sur la bobine de fil et que cette dernière est à un niveau de remplissage satisfaisant,
b. dans une deuxième couleur, différente de la première couleur, lorsque le patin est en contact avec le (ou les) fil(s) enroulé(s) sur la bobine de fil et que cette dernière est à un niveau de remplissage faible.

Selon une autre caractéristique, le système d'indication comprend deux tiges parallèles ainsi que, pour chaque tige, une liaison glissière et un élément de rappel.

Selon une autre caractéristique, le système d'indication comprend une traverse reliant les deuxièmes extrémités des deux tiges.

Selon une autre caractéristique de l'invention, le support comprend un système de liaison pour le relier de manière démontable à la structure du dispositif de dépôt de matière.

D'autres caractéristiques et avantages ressortiront de la description de l'invention qui va suivre, description donnée à titre d'exemple uniquement, en regard des dessins annexés parmi lesquels :
[Fig. 1] est une vue en perspective d'un dispositif de dépôt de matière sous forme de fil illustrant un mode de réalisation de l'invention,

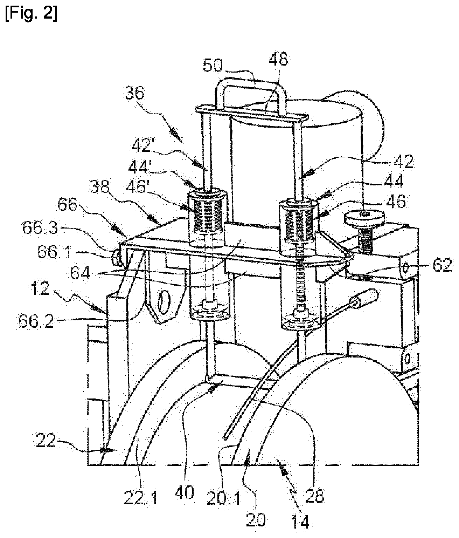

[Fig. 2] est une vue en perspective d'une partie d'une bobine de fil sans capotage et d'un système d'indication du niveau de remplissage de la bobine illustrant un mode de réalisation de l'invention,
[Fig. 3] est une vue de face d'un système d'indication du niveau de remplissage d'une bobine, cette dernière étant quasiment complète, illustrant un mode de réalisation de l'invention,
[Fig. 4] est une vue de face du système d'indication du niveau de remplissage d'une bobine visible sur la figure 3, la bobine étant quasiment vide,
[Fig. 5] est une vue de côté d'une partie du système d'indication du niveau de remplissage d'une bobine illustrant une première variante, la bobine étant à un premier niveau de remplissage,
[Fig. 6] est une vue de côté d'une partie du système d'indication du niveau de remplissage d'une bobine visible sur la figure 5, la bobine étant à un deuxième niveau de remplissage,
[Fig. 7] est une vue de côté d'une partie du système d'indication du niveau de remplissage d'une bobine illustrant une deuxième variante, la bobine étant à un premier niveau de remplissage, et
[Fig. 8] est une vue de côté d'une partie du système d'indication du niveau de remplissage d'une bobine visible sur la figure 7, la bobine étant à un deuxième niveau de remplissage.

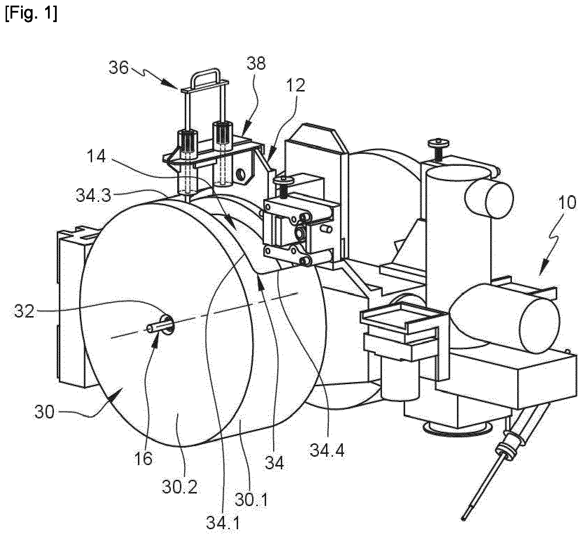

Selon un mode de réalisation visible sur la figure 1, un dispositif de dépôt de matière sous forme de fil permettant de mettre en oeuvre une technique dite par dépôt de matière sous énergie focalisée (également appelée DED pour « Directed Energy Déposition » en anglais) comprend une tête de dépôt 10, au moins une structure 12 supportant la tête de dépôt 10 ainsi qu'au moins une bobine de fil 14 configurée pour alimenter la tête de dépôt 10 en fil et pivoter autour d'un axe de rotation 16 relié à la structure 12 et parallèle à une première direction. Selon la configuration visible sur la figure 1, la première direction est sensiblement horizontale.

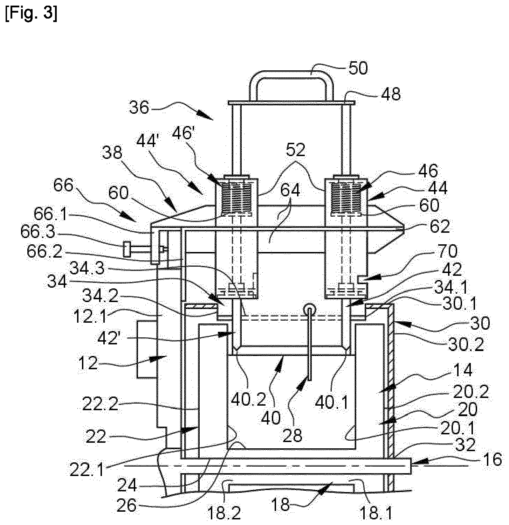

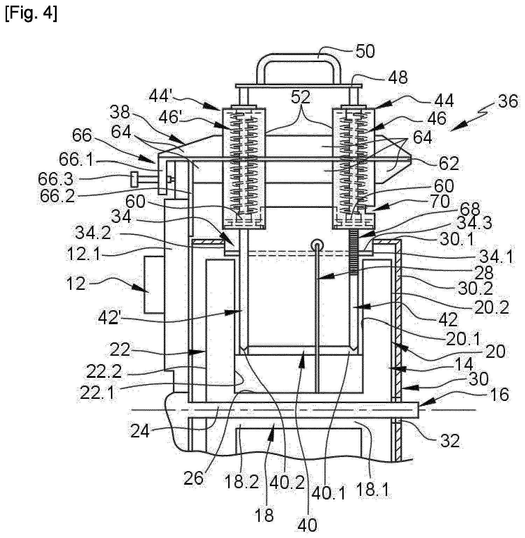

Selon un mode de réalisation visible sur les figures 3 et 4, la bobine de fil 14 comprend un moyeu 18 qui s'étend entre des première et deuxième extrémités 18.1, 18.2 ainsi que deux flasques 20, 22 positionnés à chacune des première et deuxième extrémités 18.1, 18.2 du moyeu 18. Les flasques 20, 22 comprennent des faces intérieures 20.1, 22.1 orientées l'une vers l'autre ainsi que des faces extérieures 20.2, 22.2 opposées aux faces intérieures 20.1, 22.1, les faces intérieures et extérieures 20.1, 20.2, 22.1, 22.2 étant parallèles entre elles et positionnées dans des plans perpendiculaires à l'axe de rotation 16 lorsque la bobine de fil 14 est montée sur l'axe de rotation 16. Le moyeu 18 comprend un trou traversant 24, configuré pour loger l'axe de rotation 16, qui s'étend d'une extrémité à l'autre du moyeu 18 et débouche au niveau des faces extérieures 20.2, 22.2 des flasques 20, 22. Le moyeu 18 comprend également une surface cylindrique 26, coaxiale au trou traversant 24, qui s'étend entre les faces intérieures 20.1, 22.1 des flasques 20, 22 et sur laquelle est enroulé au moins un fil 28. En fonctionnement, le moyeu 18 de la bobine de fil 14 est monté sur l'axe de rotation 16.

De manière connue, le dispositif de dépôt de matière comprend un mécanisme de maintien configuré pour maintenir la bobine de fil 14 sur l'axe de rotation 16 et permettre un montage et démontage aisés de la bobine de fil 14 ainsi qu'un capotage 30 configuré pour coiffer la bobine de fil 14. Ce capotage 30 comprend une paroi cylindrique 30.1 ainsi qu'une paroi transversale 30.2. Cette dernière comprend un orifice 32 pour permettre le passage de l'axe de rotation 16. La paroi cylindrique 30.1 comprend une ouverture 34 pour permettre le passage du fil 28, délimitée par deux premiers bords 34.1, 34.2 sensiblement parallèles entre eux et à la paroi transversale 30.2, séparés d'une distance supérieure à la largeur séparant les deux flasques 20, 22 ainsi que par deux deuxièmes bords 34.3, 34.4 (visibles sur les figures 1, 3 et 4) parallèles entre eux et sensiblement perpendiculaires à la paroi transversale 30.2.

La tête de dépôt 10, la structure 12, la bobine de fil 14 ainsi que le capotage 30 ne sont pas plus décrits car ils sont connus de l'homme du métier et peuvent être identiques à ceux de l'art antérieur.

Le dispositif de dépôt de matière sous forme de fil comprend au moins un système d'indication 36 configuré pour indiquer un niveau de remplissage de la bobine de fil 14. Ce système d'indication 36 comprend un support 38 solidaire de la structure 12 du dispositif de dépôt, un patin 40 configuré pour prendre appui contre le fil 28 enroulé sur la bobine de fil 14, au moins une tige 42 à laquelle est relié le patin 40, une liaison glissière 44 configurée pour permettre à la tige 42 de se translater selon une deuxième direction sécante au premier axe de rotation 16 ainsi qu'un élément de rappel 46 configuré pour translater la tige 42 en direction de l'axe de rotation 16. Ainsi, la position de la tige 42 est fonction du niveau de remplissage de la bobine de fil 14.

Selon une configuration, le support 38 est orienté approximativement parallèlement à l'axe de rotation 16. Dans le cas d'un axe de rotation 16 sensiblement horizontal, le support 38 est sensiblement horizontal et positionné au-dessus de la bobine de fil 14.

Chaque tige 42 est rectiligne et s'étend entre des première et deuxième extrémité selon la deuxième direction, le patin 40 étant relié à la première extrémité de la tige 42.

Selon un mode de réalisation, le patin 40 est un élément longiligne qui s'étend selon une direction parallèle à l'axe de rotation 16 entre des première et deuxième extrémités 40.1, 40.2. Le patin 40 présente une longueur (distance entre ses première et deuxième extrémités 40.1, 40.2) sensiblement égale ou très légèrement inférieure à la distance séparant les deux flasques 20, 22. Par très légèrement inférieure, on entend que la distance entre le patin 40 et chacun des flasques 20, 22 est inférieure au diamètre du fil 28.

Selon une configuration, le patin 40 se présente sous la forme d'une tige cylindrique sensiblement parallèle à l'axe de rotation 16.

Selon un agencement, le système d'indication 36 comprend deux tiges 42, 42' parallèles ainsi que, pour chaque tige 42, 42', une liaison glissière 44, 44' et un élément de rappel 46, 46'. Les deux tiges 42, 42' sont positionnées aux première et deuxième extrémités 40.1, 40.2 du patin 40 et dans un plan contenant l'axe de rotation 16.

Selon un mode de réalisation, le système d'indication 36 comprend une traverse 48 reliant les deux tiges 42, 42'. Selon une configuration, le patin 40 relie les premières extrémités des deux tiges 42, 42' et la traverse 48 relie les deuxièmes extrémités des deux tiges 42, 42'.

Le système d'indication 36 comprend une poignée 50, solidaire de la traverse 48, pour permettre d'écarter le patin 40 de l'axe de rotation 16 à l'encontre des éléments de rappel 46.

Selon un mode de réalisation, chaque élément de rappel 46, 46' est un ressort de compression à spirale.

Chaque liaison glissière 44, 44' comprend un tube 52 solidaire du support 38, coaxial à la tige 42, 42' correspondant et configuré pour loger l'élément de rappel 46, 46'. Selon un agencement, le tube 52 s'étend de part et d'autre du support 38. Au droit de chaque tube 52, le support 38 comprend un orifice 54 de diamètre sensiblement identique au diamètre extérieur du tube 52.

Selon un mode de réalisation, chaque liaison glissière 44, 44' comprend au moins un palier coulissant 56, solidaire du tube 52, dans lequel coulisse la tige 42, 42' correspondante. Selon une configuration, chaque liaison glissière 44, 44' comprend deux paliers coulissants 56, 56', un à chaque extrémité du tube 52. Selon un agencement, chaque tube 52 comprend une première paroi transversale 58.1 à une première extrémité (la plus éloignée de l'axe de rotation 16) ainsi qu'une deuxième paroi transversale 58.2 à une deuxième extrémité, les première et deuxième parois transversales 58.1, 58.2 étant traversées par la tige 42, 42' correspondante et supportant les paliers coulissants 56, 56'.

Chaque tige 42, 42' comprend une collerette 60 positionnée dans le tube 52, l'élément de rappel 46, 46' étant intercalé entre la première paroi transversale 58.1 du tube 52 et la collerette 60. Ainsi, en fonctionnement, chaque élément de rappel 46, 46' pousse la tige 42, 42' correspondante en direction de l'axe de rotation 16 et le patin 40 contre le (ou les) fil(s) enroulé(s) sur la bobine de fil 14.

Selon un mode de réalisation, le support 38 comprend une âme 62 sous la forme d'une plaque, perpendiculaire à la deuxième direction, qui s'étend dans un plan parallèle à l'axe de rotation 16 et comporte un orifice 54 pour chaque tube 52. Le support 38 peut comprendre des renforts sous forme d'ailes ou de nervures 64 sensiblement perpendiculaires à l'âme 62 et reliées aux tubes 52.

Le support 38 comprend un système de liaison 66 pour le relier de manière démontable à la structure 12 du dispositif de dépôt de matière. Selon un agencement, la structure 12 comprend une plaque 12.1 sensiblement verticale et perpendiculaire à l'axe de rotation 16. En complément, le système de liaison 66 comprend des première et deuxième ailes 66.1, 66.2 parallèles entre elles, sensiblement perpendiculaires à l'âme 62 et espacées d'une distance supérieure à l'épaisseur de la plaque 12.1, ainsi qu'au moins une vis 66.3 se vissant sur la première aile 66.1 et plaquant la plaque 12.1 contre la deuxième aile 66.2.

Bien entendu, l'invention n'est pas limitée à ce mode de réalisation pour le système de liaison 66.

Pour faciliter la détermination de la position de la (ou des) tige(s) 42, 42' et donc du niveau de remplissage de la bobine de fil 14, le système d'indication 36 comprend au moins un premier repère 68 mobile, solidaire d'au moins une tige 42, 42', ainsi qu'un deuxième repère 70 fixe, solidaire d'un élément fixe du système d'indication 36 comme le support 38 ou un des tubes 52, les premier et deuxième repères 68, 70 étant positionnés l'un par rapport à l'autre de sorte que le premier repère 68 se déplace au droit du deuxième repère 70, la position relative des premier et deuxième repères 68, 70 étant fonction du niveau de remplissage de la bobine de fil 14.

Selon une configuration, seule une tige 42 comprend des premiers repères 68.

Selon un mode de réalisation, le système d'indication 36 comprend plusieurs premiers repères 68 régulièrement répartis sur la longueur de la tige 42, chaque premier repère 68 se présentant sous la forme d'une marque circulaire entourant la tige 42. Selon un mode de réalisation, les premiers repères 68 ont des couleurs différentes en fonction de leur position sur la tige 42. Ainsi, au moins un premier repère 68.1 proche de la deuxième extrémité de la tige 42 (la plus éloignée du patin 40) est rouge et au moins un deuxième repère 68.2 proche de la première extrémité de la tige (la plus proche du patin 40) est vert. La tige 42 peut comprendre au moins un premier repère orange 68.3 entre les premiers repères vert et rouge 68.1, 68.2.

Selon une configuration, le deuxième repère 70 est une lumière 72 au niveau du tube 52 dans lequel se translate la tige 42 permettant de visualiser, depuis une zone extérieure du tube 52, une portion de la tige 42 sur laquelle est (sont) apposé(s) le (ou les) premier(s) repère(s) 68 en fonction du niveau de remplissage de la bobine de fil 14. Selon une autre configuration, le deuxième repère 70 est l'extrémité du tube 52 la plus proche de l'axe de rotation 16, le (ou les) premier(s) repère(s) n'étant visible(s) qu'en dessous du tube 52.

Les couleurs des premiers repères 68 sont déterminées de manière à ce que les premiers repères 68 situés au droit du deuxième repère 70 soient dans au moins une première couleur lorsque le patin 40 est en contact avec le (ou les) fil(s) enroulé(s) sur la bobine de fil 14 et que cette dernière est à un niveau de remplissage satisfaisant ne nécessitant pas de changement ou soient dans une deuxième couleur, différente de la première couleur, lorsque le patin est en contact avec le (ou les) fil(s) enroulé(s) sur la bobine de fil 14 et que cette dernière est à un niveau de remplissage faible nécessitant son changement.

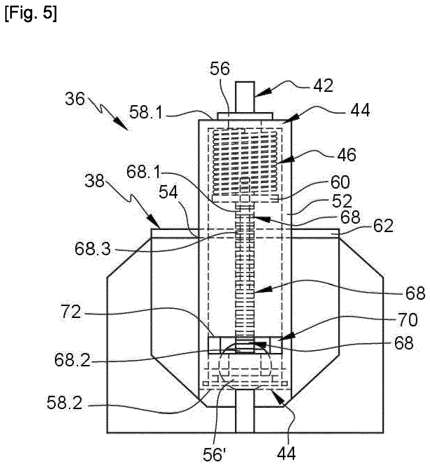

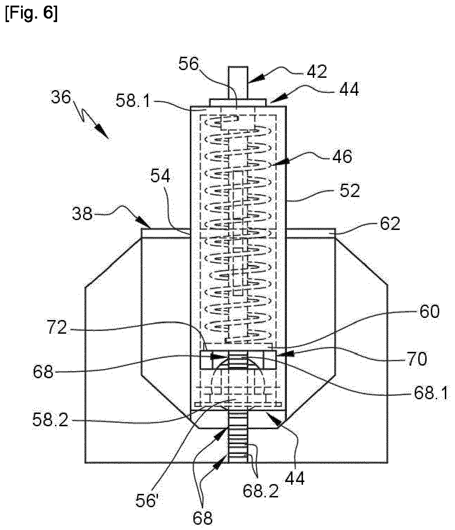

Selon une première variante visible sur les figures 5 et 6, les premiers repères 68 sont positionnés sur la tige 42 de sorte à ne pas être visibles au-dessous du tube 52 lorsque la bobine est à un niveau de remplissage maximal (lorsqu'elle vient d'être changée), comme illustré sur la figure 5, et à progressivement apparaître en dessous du tube 52 au fur et à mesure que le niveau de remplissage de la bobine diminue, comme illustré sur la figure 6.

Selon une autre variante, les premiers repères 68 sont positionnés sur la tige 42 de sorte à être visibles au-dessus du tube 52 lorsque la bobine est à un niveau de remplissage maximal (lorsqu'elle vient d'être changée) et à progressivement disparaître dans le tube 52 au fur et à mesure que le niveau de remplissage de la bobine diminue.

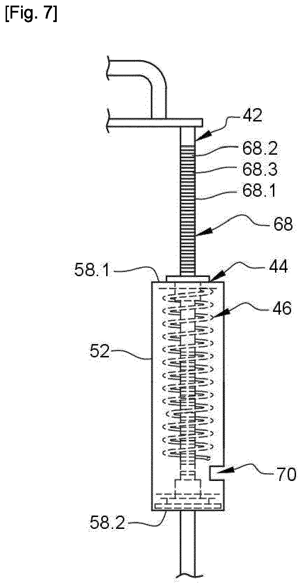

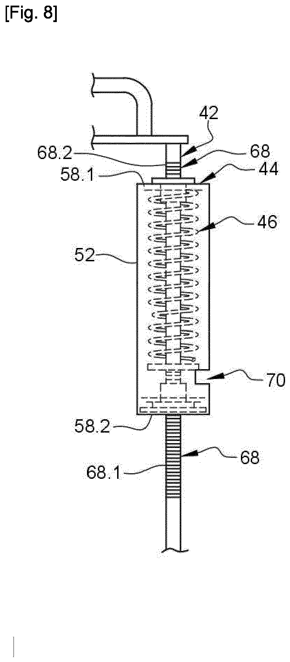

Selon une autre variante visible sur les figures 7 et 8, les premiers repères 68 sont positionnés sur la tige 42 de sorte à être visibles au-dessus du tube 52 et à ne pas être visibles au-dessous du tube 52 lorsque la bobine est à un niveau de remplissage maximal (lorsqu'elle vient d'être changée), comme illustré sur la figure 8, et à progressivement disparaître dans le tube 52 pour ceux qui sont placés au-dessus du tube 52 et à apparaître en dessous du tube 52 au fur et à mesure que le niveau de remplissage de la bobine diminue, comme illustré sur la figure 8.

Selon un autre mode de réalisation, le système d'indication 36 comprend un unique premier repère 68.1 positionné sur la tige 42 de manière à être au droit de la lumière 72 lorsque le patin est en contact avec le (ou les) fil(s) enroulé(s) sur la bobine de fil 14 et que cette dernière est à un niveau de remplissage faible nécessitant son changement.

Bien entendu, l'invention n'est pas limitée à ces premier et deuxième repères 68, 70 pour le système d'indication 36.

L'invention permet d'obtenir un système d'indication 36 robuste et de type passif permettant d'indiquer, sans besoin d'énergie électrique, le niveau de remplissage d'une bobine de fil.

## Revendications

1. Dispositif de dépôt de matière sous forme de fil comprenant une structure (12), une tête de dépôt (10) supportée par la structure (12), une bobine de fil (14) configurée pour alimenter en fil la tête de dépôt (10) et pivoter autour d'un axe de rotation (16) ainsi qu'au moins un système d'indication (36) configuré pour indiquer un niveau de remplissage de la bobine de fil (14) ; **caractérisé en ce que** le système d'indication (36) comprend un support (38) solidaire de la structure (12), au moins une tige (42) s'étendant entre des première et deuxième extrémités selon une deuxième direction sécante à l'axe de rotation (16), un patin (40) relié à la première extrémité de la tige (42, 42') et configuré pour prendre appui contre un fil (28) enroulé sur la bobine de fil (14), une liaison glissière (44, 44') configurée pour permettre à la tige (42, 42') de se translater selon la deuxième direction ainsi qu'un élément de rappel (46, 46') configuré pour translater la tige (42, 42') en direction de l'axe de rotation (16), la tige (42, 42') occupant une position en fonction d'un niveau de remplissage de la bobine de fil (14).

2. Dispositif de dépôt de matière selon la revendication 1, **caractérisé en ce que** le système d'indication (36) comprend au moins un premier repère (68) mobile, solidaire de la tige (42), ainsi qu'un deuxième repère (70) fixe, les premier et deuxième repères (68, 70) occupant une position relative en fonction du niveau de remplissage de la bobine de fil (14).

3. Dispositif de dépôt de matière selon la revendication 1 ou 2, **caractérisé en ce que** chaque liaison glissière (44) comprend un tube (52) solidaire du support (38), coaxial à la tige (42, 42') et configuré pour loger l'élément de rappel (46, 46') ainsi qu'au moins un palier coulissant (56) solidaire du tube (52) et dans lequel coulisse la tige (42, 42').

4. Dispositif de dépôt de matière selon les revendications 2 et 3, **caractérisé en ce que** le deuxième repère (70) est une lumière (72), au niveau du tube (52), permettant de visualiser depuis une zone extérieure au tube (52) une portion de la tige (42) sur laquelle est (sont) apposé(s) le (ou les) premier(s) repère(s) (68).

5. Dispositif de dépôt de matière selon la revendication précédente, **caractérisé en ce que** le système d'indication (36) comprend un unique premier repère (68.1) positionné sur la tige (42) de manière à être au droit de la lumière (72) lorsque le patin est en contact avec le (ou les) fil(s) enroulé(s) sur la bobine de fil (14) et que cette dernière est à un niveau de remplissage faible.

6. Dispositif de dépôt de matière selon l'une des revendications 2 à 4, **caractérisé en ce que** le système d'indication (36) comprend plusieurs premiers repères (68) répartis sur la longueur de la tige (42).

7. Dispositif de dépôt de matière selon la revendication précédente, **caractérisé en ce que** les premiers repères (68) ont des couleurs différentes en fonction de leur position sur la tige (42).

8. Dispositif de dépôt de matière selon la revendication précédente, **caractérisé en ce que** les couleurs des premiers repères (68) sont déterminées de manière à ce que les premiers repères (68) situés au droit du deuxième repère (70) soient :
a. dans au moins une première couleur lorsque le patin (40) est en contact avec le (ou les) fil(s) enroulé(s) sur la bobine de fil (14) et que cette dernière est à un niveau de remplissage satisfaisant,
b. dans une deuxième couleur, différente de la première couleur, lorsque le patin est en contact avec le (ou les) fil(s) enroulé(s) sur la bobine de fil (14) et que cette dernière est à un niveau de remplissage faible.

9. Dispositif de dépôt de matière selon l'une des revendications précédentes, **caractérisé en ce que** le système d'indication (36) comprend deux tiges (42, 42') parallèles ainsi que, pour chaque tige (42, 42'), une liaison glissière (44, 44') et un élément de rappel (46, 46').

10. Dispositif de dépôt de matière selon la revendication précédente, **caractérisé en ce que** le système d'indication (36) comprend une traverse (48) reliant les deuxièmes extrémités des deux tiges (42, 42').

11. Dispositif de dépôt de matière selon l'une des revendications précédentes, **caractérisé en ce que** le support (38) comprend un système de liaison (66) pour le relier, de manière démontable, à la structure (12) du dispositif de dépôt de matière.

## Patentansprüche

1. Vorrichtung zum Ablegen von Material in Form von Draht, umfassend eine Struktur (12), einen Ablagekopf (10), der von der Struktur (12) gehaltert wird, eine Drahtspule (14), die dazu ausgestaltet ist, dem Ablagekopf (10) Draht zuzuführen und um eine Rotationsachse (16) zu schwenken, sowie mindestens ein Anzeigesystem (36), das dazu ausgestaltet ist, ein Füllniveau der Drahtspule (14) anzuzeigen; **dadurch gekennzeichnet, dass** das Anzeigesystem (36) einen Halter (38) umfasst, der fest mit der Struktur (12) verbunden ist, mindestens einen Stab (42), der sich zwischen ersten und zweiten Enden entlang einer zweiten Richtung erstreckt, die die Rotationsachse (16) schneidet, eine Kufe (40), die mit dem ersten Ende des Stabs (42, 42') verbunden ist und dazu ausgestaltet ist, an einem Draht (28) zur Anlage zu kommen, der auf die Drahtspule (14) gewickelt ist, eine Gleitverbindung (44, 44'), die dazu ausgestaltet ist, dem Stab (42, 42') zu ermöglichen, sich entlang der zweiten Richtung translatorisch zu bewegen, sowie ein Rückstellelement (46, 46'), das dazu ausgestaltet ist, den Stab (42, 42') in Richtung der Rotationsachse (16) translatorisch zu bewegen, wobei der Stab (42, 42') eine Position in Abhängigkeit von einem Füllniveau der Drahtspule (14) einnimmt.

2. Vorrichtung zum Ablegen von Material nach Anspruch 1, **dadurch gekennzeichnet, dass** das Anzeigesystem (36) mindestens eine erste mobile Markierung (68) umfasst, die fest mit dem Stab (42) verbunden ist, sowie eine zweite ortsfeste Markierung (70), wobei die ersten und zweiten Markierungen (68, 70) eine relative Position in Abhängigkeit von dem Füllniveau der Drahtspule (14) einnehmen.

3. Vorrichtung zum Ablegen von Material nach Anspruch 1 oder 2, **dadurch gekennzeichnet, dass** jede Gleitverbindung (44) ein Rohr (52) umfasst, das fest mit dem Halter (38) verbunden ist, koaxial zu dem Stab (42, 42') ist und dazu ausgestaltet ist, das Rückstellelement (46, 46') sowie mindestens ein Gleitlager (56), das fest mit dem Rohr (52) verbunden ist und in dem der Stab (42, 42') gleitet, aufzunehmen.

4. Vorrichtung zum Ablegen von Material nach den Ansprüchen 2 und 3, **dadurch gekennzeichnet, dass** die zweite Markierung (70) ein Schlitz (72) an dem Rohr (52) ist, der es ermöglicht, von einem Bereich außerhalb des Rohrs (52) aus einen Abschnitt des Stabs (42) zu visualisieren, auf dem die erste(n) Markierung(en) (68) angebracht ist(sind).

5. Vorrichtung zum Ablegen von Material nach dem vorhergehenden Anspruch, **dadurch gekennzeichnet, dass** das Anzeigesystem (36) eine einzige erste Markierung (68.1) umfasst, die an dem Stab (42) so positioniert ist, dass sie direkt unter dem Schlitz (72) ist, wenn die Kufe in Kontakt mit dem (oder den) auf die Drahtspule (14) gewickelten Draht(Drähten) ist und Letztere ein geringes Füllniveau aufweist.

6. Vorrichtung zum Ablegen von Material nach einem der Ansprüche 2 bis 4, **dadurch gekennzeichnet, dass** das Anzeigesystem (36) mehrere erste Markierungen (68) umfasst, die über die Länge des Stabs (42) verteilt sind.

7. Vorrichtung zum Ablegen von Material nach dem vorhergehenden Anspruch, **dadurch gekennzeichnet, dass** die ersten Markierungen (68) in Abhängigkeit von ihrer Position auf dem Stab (42) unterschiedliche Farben haben.

8. Vorrichtung zum Ablegen von Material nach dem vorhergehenden Anspruch, **dadurch gekennzeichnet, dass** die Farben der ersten Markierungen (68) so bestimmt werden, dass die ersten Markierungen (68), die direkt unter der zweiten Markierung (70) gelegen sind:
a. in mindestens einer ersten Farbe sind, wenn die Kufe (40) in Kontakt mit dem (oder den) auf die Drahtspule (14) gewickelten Draht(Drähten) ist und Letztere ein zufriedenstellendes Füllniveau aufweist,
b. in einer zweiten Farbe sind, die von der ersten Farbe verschieden ist, wenn die Kufe in Kontakt mit dem (oder den) auf die Drahtspule (14) gewickelten Draht(Drähten) ist und Letztere ein geringes Füllniveau aufweist.

9. Vorrichtung zum Ablegen von Material nach einem der vorhergehenden Ansprüche, **dadurch gekennzeichnet, dass** das Anzeigesystem (36) zwei parallele Stäbe (42, 42') sowie, für jeden Stab (42, 42'), eine Gleitverbindung (44, 44') und ein Rückstellelement (46, 46') umfasst.

10. Vorrichtung zum Ablegen von Material nach dem vorhergehenden Anspruch, **dadurch gekennzeichnet, dass** das Anzeigesystem (36) eine Traverse (48) umfasst, die die beiden Enden der beiden Stäbe (42, 42') verbindet.

11. Vorrichtung zum Ablegen von Material nach einem der vorhergehenden Ansprüche, **dadurch gekennzeichnet, dass** der Halter (38) ein Verbindungssystem (66) umfasst, um ihn lösbar mit der Struktur (12) der Vorrichtung zum Ablegen von Material zu verbinden.

## Claims

1. Device for depositing material in the form of wire, comprising a structure (12), a depositing head (10) supported by the structure (12), a wire spool (14) configured to supply wire to the depositing head (10) and to pivot about an axis of rotation (16), as well as at least one indication system (36) configured to indicate a filling level of the wire spool (14); **characterized in that** the indication system (36) comprises a support (38) integral with the structure (12), at least one spindle (42) extending between first and second ends in a second direction transverse to the rotational axis (16), a pad (40) connected to the first end of the spindle (42, 42') and configured to bear against a wire (28) wound onto the wire spool (14), a slide link (44, 44') configured to allow the spindle (42, 42') to be relocated in the second direction and also a restoring element (46, 46') configured to relocate the spindle (42, 42') in the direction of the rotational axis (16), said spindle (42, 42') occupying a position which depends on a filling level of the wire spool (14).

2. Device for depositing material according to Claim 1, **characterized in that** the indication system (36) comprises at least a first moving index mark (68) which is integral with the spindle (42) and also a second fixed index mark (70), the first and second index marks (68, 70) occupying a relative position, depending on the filling level of the wire spool (14).

3. Device for depositing material according to Claim 1 or 2, **characterized in that** each slide coupling (44) comprises a tube (52) which is integral with the support (38), coaxial to the spindle (42, 42') and configured to house the restoring element (46, 46'), as well as at least one slide bearing (56) which is integral with the tube (52) and in which the spindle (42, 42') slides.

4. Device for depositing material according to Claims 2 and 3, **characterized in that** the second index mark (70) is a light (72), at the level of the tube (52), which makes it possible to see a portion of the spindle (42) on which the first index mark(s) (68) is (are) placed from an area outside the tube (52).

5. Device for depositing material according to the preceding claim, **characterized in that** the indication system (36) comprises a unique first index mark (68.1) positioned on the spindle (42), in such a manner as to be to the right of the light (72) when the pad is in contact with the wire(s) wound onto the wire spool (14) and said spool is at a low filling level.

6. Device for depositing material according to one of Claims 2 to 4, **characterized in that** the indication system (36) comprises multiple first index marks (68) distributed over the length of the spindle (42).

7. Device for depositing material according to the preceding claim, **characterized in that** the first index marks (68) are of different colours, depending on their position on the spindle (42).

8. Device for depositing material according to the preceding claim, **characterized in that** the colours of the first index marks (68) are determined in such a manner that the first index marks (68) located to the right of the second index mark (70) are:
a. in at least a first colour when the pad (40) is in contact with the wire(s) wound onto the wire spool (14) and said spool is at a satisfactory filling level,
b. in a second colour, different from the first colour, when the pad is in contact with the wire(s) wound onto the wire spool (14) and said spool is at a low filling level.

9. Device for depositing material according to one of the preceding claims, **characterized in that** the indication system (36) comprises two parallel spindles (42, 42') as well as, for each spindle (42, 42'), a slide coupling (44, 44') and a restoring element (46, 46').

10. Device for depositing material according to the preceding claim, **characterized in that** the indication system (36) comprises a crossbar (48) linking the second ends of the two spindles (42, 42').

11. Device for depositing material according to one of the preceding claims, **characterized in that** the support (38) comprises a coupling system (66) for linking it to the structure (12) of the device for depositing material in a detachable manner.
